**Europäisches Patentamt**

**European Patent Office**

**Office européen des brevets**

(11) Publication number: **0 597 976 B1**

# EUROPEAN PATENT SPECIFICATION

(45) Date of publication of patent specification: **14.06.95**

(51) Int. Cl.$^6$: **C10M 159/20**, C09K 7/02, C10M 173/00, //(C10M173/00, 159:20),C10N30:06,C10N40:20

(21) Application number: **92916967.0**

(22) Date of filing: **13.08.92**

(86) International application number: **PCT/EP92/01864**

(87) International publication number: **WO 93/04150 (04.03.93 93/06)**

(54) **IMPROVED CALCIUM CARBOXYLATE ANTIWEAR ADDITIVES.**

(30) Priority: **15.08.91 GB 91176222**

(43) Date of publication of application: **25.05.94 Bulletin 94/21**

(45) Publication of the grant of the patent: **14.06.95 Bulletin 95/24**

(84) Designated Contracting States: **AT BE CH DE ES FR GB GR IT LI LU MC NL**

(56) References cited:
EP-A- 403 205          EP-A- 0 315 532
EP-A- 0 435 444       EP-A- 9 234 149
FR-A- 1 279 744        FR-A- 1 367 525
FR-A- 1 540 384        GB-A- 833 868

(73) Proprietor: **EXXON CHEMICAL PATENTS INC.
200 Park Avenue
Florham Park
New Jersey 07932 (US)**

(72) Inventor: **SARGINSON, Nigel, James
Constantin Meunierlaan 1
B-3090 Overijse (BE)**

Inventor: **REYNIERS, Sylvian, Leontina, Edmond
Peter Benoitlaan 2
B-1880 Kapelle-op-den-Bos (BE)**
Inventor: **BENDA, Rainer
Avenue Salome 18
B-1150 Brussels (BE)**
Inventor: **GODWIN, Allen David
919 Live Oak Lane
Seabrook, Texas 77586 (US)**

(74) Representative: **Bawden, Peter Charles et al
EXXON CHEMICAL LIMITED
EXXON CHEMICAL TECHNOLOGY CENTRE
PO Box 1
Abingdon
Oxfordshire OX13 6BB (GB)**

**Description**

The present invention relates to the use of calcium soaps possessing high basic reserve, more commonly called overbased calcium soaps, as antiwear additives in lubricants particularly in metal working lubricants and to metal working lubricants containing such overbased calcium salts.

The most widely known overbased calcium soaps are salts of alkylarylsulphonic acids and it has been proposed in PCT Patent Application 87/01723 that these overbased salts particularly overbased sulphonates be used as antiwear additives in lubricants. A drawback of these compounds is that they contain sulphur which is environmentally undesirable and furthermore a high calcium level is rehired to impart adequate antiwear properties.

In our European Patent 0234149 we describe new calcium superbase soaps, which have a high Total Base Number (TBN) of the order of 500 or even higher, and which yield stable and clear solutions in oil when employed and they are proposed as anticorrosion additives in automotive crankcase lubricants.

We have now found that such compounds are highly effective antiwear additives in lubricants particularly in metal working lubricants and drilling muds.

The present invention therefore provides the use as an antiwear additive of a calcium overbased soap comprising calcium carbonate dispersed in the calcium salt of a carboxylic acid, the said acids consisting of a mixture or otherwise of saturated organic carboxylic acids containing from 7 to 13 carbon atoms, having the following characteristics:

a linear acid content of between 0 and 40% by weight,

a content of acids which are branched on carbon 2 of between 0 and 20% by weight, and,

a content of acids which are mono- or polysubstituted on carbon 3 and/or on the carbons of higher rank which is equal to or greater than 50% by weight.

Surprisingly, we have found that, whilst basic calcium salts of single carbon number carboxylic acids (e.g. Cekanoic C8 acid; Cekanoic C13 acid) do not form stable solutions in base oils, basic calcium salts of mixtures of different carbon number carboxylic acids (e.g. Cekanoic 8910 acid) do give stable solutions in base oils and are effective sulphur free antiwear additives.

The calcium overbased soaps are preferably prepared from saturated $C_8$, $C_9$ and $C_{10}$ organic carboxylic acids which consist of isomeric mixtures and which are generally known as oxo acids. These oxo acids are characterized by a low linear acid content, generally less than or equal to 10% by weight, a low content of acids which are branched on carbon 2, generally less than or equal to 10% by weight, and a high content of acids which are mono- or polysubstituted on carbon 3 and/or carbons of higher rank, which is generally greater than 80% by weight. The oxo acids are obtained by hydroformylation of $C_7$, $C_8$ and $C_9$ olefins, followed by an oxidation.

The calcium soaps prepared from the $C_8$ saturated carboxylic acid (that is containing 8 carbon atoms) marketed under the trademark Cekanoic are particularly useful especially when used in emulsions, this acid consisting of an isomeric mixture of octanoic acids containing at most 10% by weight of n-octanoic acid, at most 10% by weight of $C_8$ acids which are branched on carbon 2 and at least 80% by weight of $C_8$ acids which are branched on carbon 3 and/or the carbons of higher rank. In fact, it has surprisingly been found that the use of this acid makes it possible to obtain calcium soaps with a very high TBN of the order of 500 or higher although products of TBN from 200 may be used as antiwear additives.

Among the organic carboxylic acids which are also suitable for the present invention there may also be added the derivatives which are mono- or polysubstituted in the 3-position and/or of higher rank of the acids corresponding to heptanoic acid, octanoic acid, nonaoic acid, decanoic acid, undecanoic acid. These include, for example, 3-methylhexanoic acid, isoocotanoic acid, 4,5-dimethylhexanoic acid, isononanoic acid, 3,5,5-trimethylhexanoic acid, isodecanoic acid, 3-ethyloctanoic acid, isoundecanoic acid, 4-ethylnonanoic acid and isododecanoic acid. The mixture of one or more of the above mentioned acids, whether mixed or not with their isomers, is also suitable for the present invention, it being understood that the content of linear acids does not exceed 40% and that the content of acids which are substituted on carbon 2 does not exceed 20%. The Applicant Company has found, in fact, that the linear acids and that the acids branched on carbon 2 lead to the formation of a viscous product, or to setting solid or, alternatively, to a precipitate which renders the product practically useless.

The calcium overbased soaps used in this invention conveniently be made by the process described in our European Patent 0234149, according to which a calcium oxide and/or hydroxide is reacted, with stirring, with carbon dioxide (or $CO_2$) which is bubbled through the reaction mixture and at least one organic carboxylic acid, in the presence of at least one promoter which makes $CO_2$ fixation easier and at least one catalyst. The water formed during the reaction is removed. In the preferred process the reaction is performed in at least one organic solvent at a temperature of between 80 and 120 °C, and the acid is a saturated organic carboxylic acid containing from 7 to 13 carbon atoms, in which the content of linear acids is less than or equal to 40% by weight, the content of acids branched in carbon 2 is less than or equal to 20% by weight, and the content of acids branched on carbon 3 and/or the carbons of higher rank is equal to or higher than 40% by weight.

When the reaction has ended, after filtration, the organic solvent may be replaced by an oil, or a mixture of oils, chosen from natural oils and/or semisynthetic oils and/or synthetic oils. However, the oil chosen is preferably that which forms the basis of the lubricating composition to which the calcium superbase soap is added.

In accordance with a preferred embodiment, the organic solvent is allowed to evaporate during the reaction and is recycled into the reaction mixture so as to produce therein a bubbling action which promotes the reaction.

At least one nonpolar organic solvent chosen from naphtha, hexane, kerosene, benzene, toluene or xylene is preferably used. It is also possible to use a mixture of paraffinic hydrocarbons of mineral or synthetic origin, preferably containing a low proportion of aromatic and/or naphthenic hydrocarbons, such as white spirit. It is also possible to consider the use of polar organic solvents such as alcohols, for example 1-butanol, 2-butanol, ethylene glycol, propylene glycol, ethylene glycol monomethyl ether, ethylene glycol dimethyl ether, diethylene glycol and its ethers, mixtures of alcohols derived from paraffin, or methyl ethyl ketone.

The molar ratio of calcium to the organic carboxylic acid employed in the reaction is generally between 0.55 and 2, which corresponds to a basicity of between 1.1 and 4.

It should be recalled that the basicity is equal to the ratio of equivalents of calcium to the equivalents of carboxylic acids which are employed, that is to say, to the molar ratio of the calcium concentration to that of the carboxylic acids, multiplied by 2.

Furthermore, an hourly flow rate of carbon dioxide preferably is imposed such that the hourly mass ratio of carbon dioxide to calcium is between 0.5 and 2, and preferably between 0.7 and 1.5.

Among the catalysts which may be used in the process there may be mentioned metal oxides, for example zinc oxide, aluminium oxide $Al_2O_3$, silver oxide $Ag_2O$, magnesium oxide $MgO$, and zinc carboxylates such as zinc octanoate.

Among the promoters which make $CO_2$ fixation easier and which can be used in the present invention there may be mentioned labile hydrogen compounds such as alcohols, for example methanol, 2-propanol, octyl alcohol, ethylene glycol, triethylene glycol, stearyl alcohol, cyclohexylene or phenol; amines, for example aniline, phenylenediamine, or dodecylamine; or, yet again, a mixture of alcohols and/or amines, for example of methanol and aqueous ammonia. The preferred material is methanol, which gives the highest basicities and the shortest filtration times during the preparation of the calcium soap according to the invention.

Metal working operations, in which the calcium salts are used are for example, rolling, forging, hot-pressing, blanking, bending, stamping, drawing, cutting, punching, spinning and the like, generally employ a lubricant to facilitate the same. Lubricants greatly improve these operations in that they can reduce the power required for the operation, prevent sticking and decrease wear of dies, cutting tools and the like. In addition, they frequently provide rust inhibiting properties to the metal being treated.

Many presently known metal working lubricants are oil-based lubricants containing a relatively large amount of active sulphur present in additives therein. (By "active sulphur" is meant chemically combined sulfur in a form which causes staining of copper.) The presence of active sulphur is sometimes detrimental because of its tendency to stain copper, as well as other metals including brass and aluminum. Nevertheless, its presence has frequently been necessary because of the beneficial extreme pressure properties of active sulphur- containing compositions, especially for the working of ferrous metals.

PCT Patent Publication WO 87/01723 describes how overbased calcium sulphonates and carboxylates may be used to overcome these problems. But the use of the calcium sulphonates introduces sulphur into the lubricant and require a high calcium level to achieve the desired antiwear properties and the particular Carboxylates described have poor oil solubility.

The lubricants of this invention may be oil based, oil/water systems including oil in water and water in oil. The invention is particularly applicable to aqueous cutting fluids and hydraulic fluids, emulsifiable oils suitable for incorporation into water for production of such fluids, additives and additive concentrates including the emulsifier system for incorporation into such fluids and emulsifiable oils.

Emulsified oils are now used in a large number of machining operations due to an industry demand for higher production rates, lower costs, improved environmental conditions and better operator acceptance. Emulsions are generally used where cooling is more important than lubrication. Although neat oils may still be used in operations such as broaching, deep drilling, or where surface finish is particularly critical, the

3

development of extreme pressure additives for emulsions has increased their applicability and use.

The emulsions are generally prepared from emulsifiable oils supplied to the final user for incorporation into the water. The emulsifiable oils frequently contain additives which can be supplied as an additive package, formulation or concentrate to the producer of the emulsifiable cutting oil. In a preferred aspect the invention relates to the use of the overbased calcium salts as antiwear additives in water/oil fluids. Amongst the various types of fluids, there is a marked trend towards those having an optimised combination of lubricating, cooling and long-life properties. Such fluids are obtained by micro-emulsification of a base oil frequently formulated with anti-corrosion and biostability agents. The micro-emulsion type of cutting fluid has good stability due to the very small size of their hydrocarbon droplets which do not tend to coalesce during storage. Although this feature is an advantage over conventional fluids forming white emulsion whose hydrocarbon droplet size is much larger, where formulation with water-soluble biostability agents is difficult or emulsifier system is applicable to both types of emulsions.

Aqueous metal working fluids have been known for many years and different additives have been developed to provide oils useful for different types of metal working and for use with different types of water.

Where the fluids of the present invention are aqueous metal working fluids they may be water in oil emulsions or oil in water emulsions, largely depending upon whether lubrication or cooling is the more important. We are, however, particularly concerned with the currently more popular high water content micro emulsion cutting fluids.

Where oil/water systems are used we prefer to use the emulsifier system of our European Patent Application Publication Number 0403205 which may contain co-emulsifiers to control the hydrophilic/lipophilic balance of the system according to the nature of the oil to be emulsified. When used we prefer to use non ionic co-emulsifiers or a blend of non ionic co-emulsifiers. Examples of suitable non ionic emulsifiers include amine oxides, ethoxylated phenols and C8 to C21 ethoxylated or propoxylated alcohols with 1 to 15 moles of ethylene oxide or propylene oxide or a mixture thereof. Typically decyl, dodecyl, isododecyl, isoundecyl, isotridecyl, ntridecyl, n and isopentadecyl monodecyl alcohols ethoxylated with 3 to 7 moles of ethylene oxide.

Coupling agents may also be included and examples of coupling agent which may be used include non-ionic wetting agents which improve the compatibility of the components, any desired non-ionic wetting agent may be used, such as condensation product of a fatty acid or derivative, such as a derivative of a fatty acid, fatty alcohol, fatty amide or fatty amine, with ethylene oxide or propylene oxide. It is preferable that the non-ionic wetting agents include the polyethoxyesters of fatty acids, the monooleate of polyethylene glycol, the monolaurate of a polyethylene glycol, the polyethoxyethers or polypropoxyethers of alcohols, the condensation product of an alkylphenol such as dodecyl phenol with 12 moles of ethylene oxide, and the sulfonated product of the condensation of an alkylphenol or an alkylnaphthol with ethylene oxide.

The emulsifier system is a mixture of salts formed by neutralising the acids with an organic or inorganic base. We prefer to first make the mixture of the acids and neutralise with the base. When the base is organic it may be an amine or alcanolamine; where it is inorganic base it can be an alkali metal hydroxide or NH40H. The preferred base is KOH in a preferred treat rate to avoid the system gelling. The amount of base is preferably such the the pH of the system is in the range of 8.5 to 9 when the product is diluted to 3 vol% in water of hardness 250 ppm calcium carbonate.

We prefer that the emulsifiable cutting oil for incorporation into bulk water contains from 3 to 35 wt%, preferably 3 to 25 wt%, more preferably 7 to 20 wt% of the emulsifier system. The amount of oil incorporated into water depends upon the nature and use of the fluid. Typically micro-emulsions contain from 2% to 10% by weight of oil and the milky emulsions contain from 4% to 10% by weight.

Where an amine is also used in the fluids of this invention we prefer to use alkanolamines especially those which contain from one to three aliphatic radicals, each containing from one to four carbon atoms, and have at least one hydroxy group attached to a carbon atom, and include primary, secondary and tertiary alkylol amines such as mono-, di- or triethanolamine. These amines are generally water-soluble and have no offensive odour. The preferred amine is diethanolamine, and has no odour.

An aqueous metal working fluid embodying the invention may be used in all metal working operations but gives excellent results in applications in which the pressure per unit of are is relatively low, such as surface grinding operations especially where a number of pieces are being ground simultaneously. For heavy-duty applications, in which the pressure per unit of area is relatively high, an aqueous fluid embodying the invention preferably contains, in addition to the calcium soap additional antiwear additives such as phosphate esters, sulphurized hydrocarbons and copper passivator such as benzotriazole, tolyltriazole and its derivatives, thiadiazole and dimercapto thiadiazole.

Other ingredients which may be incorporated in the fluids include anti-foaming agents, biocides, anti-rust additives, extreme pressure additives, corrosion inhibitors, antioxidants, and oiliness/lubrication agents.

Although the presence of water in the emulsifable oil is not essential the inclusion of water gives a control of its viscosity which is preferred to be below 500 centistokes at 20°C for easier handling. When water is present we prefer the formulation contain from 5 to 60 wt% water.

For the production of micro emulsions the emulsifiable oil generally contains 5 to 35, more preferably to to 14 wt% oil although larger amounts could be used which may be all the oil required in the final fluid or further oil may be added. Whereas for milky emulsions the emulsifiable oils generally contain from 60 to 90 wt% oil. any type of oil may be used, mineral or synthetic and the mineral oils may be paraffinic or naphthenic and it may be necessary to adjust the emulsifier system within the scope of the invention according to the type of oil.

In the preparation of an emulsifiable oil embodying the invention, the ingredients are mixed at ordinary temperatures to produce a water-miscible fluid. We prefer to first mix the emulsifier system, the oil and the calcium soap together when any other additives and any water that may be need may also be added at room temperature, with stirring.

The preferred salts of sulphonic acids used in the emulsifier system are salts of alkylaryl sulphonic acids and of an organic or mineral base. Additional flexibility may be provided in the system by using sulphonic acids whose molecular weights are distributed in accordance with the function $C = f(M)$, where C denotes concentration and M denotes molecular weight of individual acids, which function has two distinct molecular weight maximum $M_1$ and $M_2$, with $M_1 > M_2$ $M_2$ is described in our United Kingdom Patent 1476841.

These sulphonic acid salts may be either inorganic or organic. The preferred inorganic salts are potassium salts since their use reduces gelling problems which can arise with other salts. However, ammonium salts, or those of the other alkali metals, or of the alkaline earth metals are possible. The organic bases which may be employed are nitrogen bases, for example, a primary, secondary or tertiary amine, a polyamine, an alkanolamine etc. The preferred organic bases are monoethanolamine, diethanolamine, triethanolamine.

We prefer that the value of $M_1$ may be 270 to 360, but is preferably 270 to 400 and is more preferably from 360 to 400. In general, the value of $M_2$ should be from 350 to 700 and is preferably from 450 to 500.

It is preferred that the alkyl groups of the alkylaryl sulphonates are branched-chain alkyl groups since improved emulsion stability is often found in such cases. Accordingly, it is preferred that at least a proportion of the sulphonic acid in the emulsifier composition is made up of branched-chain alkyl type compounds. Preferably a major proportion, and most preferably all, the sulphonic acid is of such compounds. Highly preferred are alkylaryl sulphonates derived from benzene and orthoxylene, especially when the alkyl groups are branched-chain, for examples, when propylene, butene or isobutylene oligomers are used for alkylation.

The high molecular weight carboxylic acids used in the preferred emulsifier systems are preferably hydrocarbyl-substituted carboxylic acids and anhydrides made by reacting one or more alpha-beta olefinically unsaturated carboxylic acid or anhydride reagents containing two to about 20 carbon atoms, exclusive of the carboxyl-based groups, with one or more olefins containing at least about 12 carbon atoms, as described more fully hereinafter.

The alpha-beta olefinically unsaturated carboxylic acids and anhydrides may be either monoabasic or polybasic in nature.

Where the fluids of this invention are oil based suitable lubricating oils include natural and synthetic oils and mixtures thereof.

Natural oils are often preferred; they include liquid petroleum oils and solvent-treated or acid-treated mineral lubricating oils of the paraffinic, napthathenic and mixed paraffinic-naphathenic types. Oils of lubricating viscosity derived from coal or shale are also useful base oils.

Synthetic lubricating oils include hydrocarbon oils and halo-substituted hydrocarbon oils such as polymerized and interpolymerized olefins [e.g., polybutylenes, polypropylenes, propylene-isobutylene copolymers, chlorinated polybutylenes, poly (1-hexenes), poly (1-octenes), poly (1-decenes)]; alkylbenzenes [e.g., dodecylbenzenes, tetradecylbenzenes, dinonylbenzenes, di(2-ethylhexyl)benzenes]; polyphenyls (e.g., biphenyls, terphenyls, alkylated polyphenyls); and alkylated diphenyl ethers and alkylated diphenyl ethers and alkylated diphenyl sulfides and the derivatives, analogs and homologs thereof.

Alkylene oxide polymers and interpolymers and derivatives thereof where the terminal hydroxyl groups have been modified by esterification, etherification, etc., constitute another class of known synthetic lubricating oils. These are exemplified by polyoxyalkylene polymers prepared by polymerization of ethylene oxide or propylene oxide, the alkyl and aryl ethers of these polyoxylakylene polymers (e.g., methyl-polyisopropylene glycol ether having an average molecular weight of 500-1000, diethyl ether of polypropylene glycol having a molecular weight of 1000-1500); and mono- and polycarboxylic esters thereof, for example, the acetic acid esters, mixed C3 - C8 fatty acid esters and C13 Oxo acid diester of tetraethylene glycol.

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkyl malonic acids, alkenyl malonic acids) with a variety of alcohols (e.g., butyle alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyle sebacate, diisoctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethyl-hexanoic acid.

Esters useful as synthetic oils also include those made from C5 to C12 monocarboxylic acids and polyols and polyol ethers such as neopentyl glycol, trimethylolpropane, pentaerythritol, dipentaerythritol and tripentaerythritol.

Silicon-based oils such as the polyalkyl-, polyaryl-, polyalkoxy-, or polyaryloxysiloxane oils and silicate oils comprise another useful class of synthetic lubricants; they include tetraethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy) disiloxane, poly(methyl) siloxanes and poly(methylphenyl) siloxanes. Other synthetic lubricating oils include liquid esters of phosphorous-containing acids (e.g., tricresyl phosphate, trioctyl phosphate, diethyl ester of decylphosphonic acid) and polymeric tetrahydrofurans.

Unrefined, refined and rerefined oils can also be used. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be an unrefined oil. Refined oils are similar to the unrefined oils except they have been further treated in one or more purification steps to improve one or more properties. Many such purification techniques, such as distillation, solvent extraction, acid or base extraction, filtration and percolation are known to those skilled in the art. Rerefined oils are obtained by processes similar to those used to obtain refined oils applied to refined oils which have been already used in service. Such rerefined oils are also known as reclaimed or reprocessed oils and often are additionally processed by techniques for removal of spent additives and oil breakdown products.

Any metal to be worked may be treated according to this invention. Examples are ferrous metals, aluminum, copper, magnesium, titanium, zinc and manganese. alloys thereof, with and without other elements such as silicon, may also be treated; examples of suitable alloys are brass and various steels (e.g., stainless steel).

The lubricating compositions of this invention can be applied to the metal workpiece prior to or during the working operation in any suitable manner. They may be applied to the entire surface of the metal, or to any portion of that surface with which contact is desired. For example, the lubricant can be brushed or sprayed on the metal, or the metal can be immersed in a bath of the lubricant. In high speed metal forming operations spraying or immersion are preferred.

In a typical embodiment of this invention, a ferous metal workpiece is coated with the lubricant prior to the working operation. For example, if the workpiece is to be cut it may be coated with the lubricant before contact with the cutting tool. (The invention is particularly useful in connection with cutting operations.) It is also within the scope of the invention to apply the lubricant to the workpiece as it contacts the cutting tool, or to apply it to the cutting tool itself whereupon it is transferred to the workpiece by contact. Thus, this invention in a generic sense is applicable to any metal working operation wherein the workpiece has on its surface, during said operation, the above-described lubricant regardless of how applied.

The present invention is illustrated by the following examples.

Table 1 which compares the results of stability tests carried out with calcium salts of Cekanoic C8 acid and calcium salts of Cekanoic C 8910 acid both of basicity of 2.5 (ratio of moles of calcium to moles of acid). As can be seen calcium salts of Cekanoic C 8910 acid show a markedly superior stability in several base oils. The stability of these products at low (6°C) and high (50°C) temperatures was also demonstrated.

Having determined the stability in base oils, the extreme pressure/antiwear activity of the products was investigated. Evaluation of the basic calcium salt of Cekanoic C 8910 acid as an antiwear additive surprisingly showed similar or better performance than conventional basic calcium alkylbenzene sulphonates, at a significantly lower total calcium levels. The results of Four Ball Tests (ASTM D 2783) are shown in Table 2. As can be seen better antiwear performance was observed with the calcium salt of Cekanoic C 8910 acid in Stanco 150 versus the calcium alkylbenzene sulphonate in Stanco 150 (base oil) at significantly lower total calcium levels (0.6 wt% total calcium versus 1.5 wt%).

These Examples show that use of the products of this invention offer: excellent stability in base oils for basic calcium salts of short chain carboxylic acids, and outstanding antiwear performance at substantially lower total calcium levels versus currently used calcium alkylbenzene sulphonates. These two features give improved formulation flexibility.

TABLE 1

| STABILITIES OF 5 AND 10 WT% SOLUTIONS OF 10 WT% CALCIUM SALTS OF CEKANOIC C8 ACID AND CEKANOIC C 8910 ACID IN EXXSOL D40 AND EXSOL D100 BASE OILS AT AMBIENT TEMPERATURE | | | | | | |
|---|---|---|---|---|---|---|
| CALCIUM SALT | BP HVI BASE OIL 80 SN (Very paraffinic solvent neutral base oil) | | BP BASE OIL 130 SN (Paraffinic base oil, obtained by hydrocracking) | | STANCO 150 (Paraffinic solvent neutral base oil) | |
| | at 5% | at 10% | at 5% | at 10% | at 5% | at 10% |
| 10% Ca Ck 8 in Exxsol D40 | - - | - - | | - | - - | - - |
| 10% Ca Ck 8910 in Exxsol D40 | - | S | S | S | S | S |
| 10% Ca Ck 8 in Exxsol D100 | - - | - - | S | - | - - | - - |
| 10% Ca CK 8910 in Exxsol D100 | S | S | S | S | NM | NM |

S = Stable - = Slight Precipitation - - = Moderate Precipitation

NM = Not Measured

EP 0 597 976 B1

## TABLE 2

### RESULTS OF ANTIWEAR/EXTREME PRESSURE TESTS ON 10 WT% OVERBASED CALCIUM SALTS OF CEKANOIC 8910 IN EXXSOL D100

ANTIWEAR (4 Ball Test at 1800 REV/Min; 50 Kg Pressure and at; 50°C)

| | | | | | STANCO 150 |
|---|---|---|---|---|---|
| STANCO 150 | - | - | - | - | |
| % of 10 Wt% Ca Ck 8910 in STANCO 150 | 5 (0.5% Ca) | 6 (0.6% Ca) | 10 (1% Ca) | - | - |
| % of 15 wt% CA Alkylbenzene Sulphonate in STANCO 150 | - | - | - | 10 (1.5% Ca) | - |
| Diameter of Wear (mm) on Four Balls | 0.525 | 0.39 | 0.37 | 0.49 | 1.8 |
| EXTREME PRESSURE | | | | | |
| Weight (Kg) at which Seizure occurs | 100 | - | 126 | 160 | - |
| Weight (Kg) at which welding occurs | 160 | - | 160 | 240 | 160 |

Example 2

The calcium salt of C8 Cekanoic acid used in Example 1 was tested as a component in an aqueous emulsion as follows. 20 parts of the oil solution of the calcium salt was mixed with 10 parts per 100 of the emulsifier prepared by reacting a $C_{13}$ alcohol with 5 moles of ethylene oxide, this mixture was diluted to 5 parts per 100 in water and found to give a stable emulsion.

Example 3

The stabilities of similar emulsions to those of Example 2 at various calcium levels were compared with comparable emulsions containing calcium sulphonate. All the emulsions were made up to 100 parts with distilled water. The results are set out in Table 3.

Example 4

The tests of the previous Examples were repeated using the synthetic lubricant diisodecyl ether (DIDE) in place of the mineral oil. The results were:

TABLE 3

| Parts Per Hundred of Emulsifier | 2.5 | 5 | 10 |
|---|---|---|---|
| 20 pph of 10 wt% Calcium Salt of Cekanoic C8 Acid in Exxsol D100 | M | P | S |
| 14 pph of 14 wt% Calcium Alkylbenzene Sulphonate (TBN 400) | NT | NT | U |
| S = Stable<br>P = Slight separation/precipitation within 24 hours<br>M = Moderate separation/precipitation within 24 hours<br>U = Immediate separation/precipitation<br>NT = Not Tested | | | |

TABLE 4

| | DIDE | DIDE + 10% Overbased Calcium Sulphonate | DIDE + 5% Overbased Calcium Sulphonate |
|---|---|---|---|
| 4 ball wear test: | | | |
| - scar diam (mm) | 0.455 | 0.34 | 0.37 |
| 4 ball EP test: | | | |
| - seizure load (kg)<br>- scar diam (mm) | 45<br>0.62 | 80<br>1.9 | |
| other results for information: | | | |
| 4 ball EP test: | | | |
| - load(kg)/daim(mm) | 40/0.325<br>45/0.62 (seizure)<br>50/1.711 | 60/0.335<br>70/0.36<br>75/0.39<br>80/1.9(seizure) | |

**Claims**

1. The use as an antiwear additive of a calcium overbased soap comprising calcium carbonate dispersed in the calcium salt of a carboxylic acid, the said acids consisting of a mixture or otherwise of saturated organic carboxylic acids containing from 7 to 13 carbon atoms, having the following characteristics:
   - a linear acid content of between 0 and 40% by weight,
   - a content of acids which are branched on carbon 2 of between 0 and 20% by weight, and,
   - a content of acids which are mono- or polysubstituted on carbon 3 and/or on the carbons of higher rank which is equal to or greater than 50% by weight.

2. The use as an antiwear additive according to claim 1 of a calcium overbased soap prepared from saturated $C_8$, $C_9$ and $C_{10}$ organic carboxylic acids.

3. The use as an antiwear additive according to claim 1 of a calcium soap prepared from a $C_8$ saturated carboxylic acid.

4. The use according to any of the proceeding claims in a metal working lubricant.

10

5. The use according to any of claims 1 to 4 in a drilling mud.

6. The use according to any of the preceding claims in which the lubricant is oil based.

7. The use according to any of claims 1 to 5 in which the lubricant is an oil/water system.

8. An oil in water emulsion containing a calcium soap comprising calcium carbonate dispersed in the calcium salt of a carboxylic acid, the said acids consisting of a mixture or otherwise of saturated organic carboxylic acids containing from 7 to 13 carbon atoms, having the following characteristics:
   - a linear acid content of between 0 and 40% by weight,
   - a content of acids which are branched on carbon 2 of between 0 and 20% by weight, and,
   - a content of acids which are mono- or polysubstituted on carbon 3 and/or on the carbons of higher rank which is equal to or greater than 50% by weight.

**Patentansprüche**

1. Verwendung einer überbasischen Calciumseife, die in dem Calciumsalz einer Carbonsäure dispergiertes Calciumcarbonat umfaßt, wobei die Säuren aus einer Mischung oder sonstigem aus gesättigten organischen Carbonsäuren mit 7 bis 13 Kohlenstoffatomen mit den folgenden Charakteristika
   - einem Gehalt an linearen Säuren zwischen 0 und 40 Gew.%
   - einem Gehalt an Säuren, die am Kohlenstoff in 2-Stellung verzweigt sind, von zwischen 0 und 20 Gew.% und
   - einem Gehalt an Säuren, die am Kohlenstoff in 3-Stellung und/oder den höherrangigen Kohlenstoffen mono- oder polysubstituiert sind, von gleich oder größer als 50 Gew.%
   bestehen, als Antiverschleiß-Additiv.

2. Verwendung einer aus organischen, gesättigten $C_8$-, $C_9$- und $C_{10}$-Carbonsäuren hergestellten überbasischen Calciumseife als Antiverschleiß-Additiv gemäß Anspruch 1.

3. Verwendung einer aus organischer, gesättigter $C_8$-Carbonsäure hergestellten überbasischen Calciumseife als Antiverschleiß-Additiv gemäß Anspruch 1.

4. Verwendung nach einem der vorhergehenden Ansprüche in einem Metallbearbeitungsschmierstoff

5. Verwendung nach einem der Ansprüche 1 bis 4 in einem Bohrschlamm.

6. Verwendung nach einem der vorhergehenden Ansprüche, bei der der Schmierstoff auf Öl basiert.

7. Verwendung nach einem der Ansprüche 1 bis 5, bei der der Schmierstoff ein Öl/Wasser-System ist.

8. Öl-in-Wasser-Emulsion, die eine Calciumseife enthält, die in dem Calciumsalz einer Carbonsäure dispergiertes Calciumcarbonat umfaßt, wobei die Säuren aus einer Mischung oder sonstigem aus gesättigten organischen Carbonsäuren mit 7 bis 13 Kohlenstoffatomen mit den folgenden Charakteristika
   - einem Gehalt an linearer Säure zwischen 0 und 40 Gew.%
   - einem Gehalt an Säuren, die am Kohlenstoff in 2-Stellung verzweigt sind, von zwischen 0 und 20 Gew.% und
   - einem Gehalt an Säuren, die am Kohlenstoff in 3-Stellung und/oder den höherrangigen Kohlenstoffen mono- oder polysubstituiert sind, von gleich oder größer als 50 Gew.%
   bestehen.

**Revendications**

1. Utilisation comme additif anti-usure d'un savon de calcium surbasique comprenant du carbonate de calcium dispersé dans le sel de calcium d'un acide carboxylique, ledit acide consistant en un mélange ou une autre association d'acides carboxyliques organiques saturés contenant 7 à 13 atomes de carbone, ayant les caractéristiques suivantes :
   - une teneur en acides linéaires de 0 à 40 % en poids,

- une teneur en acides ramifiés sur l'atome de carbone N° 2 de 0 à 20 % en poids, et
- une teneur en acides mono- ou polysubstitués sur l'atome de carbone N° 3 et/ou sur les atomes de carbone de rang supérieur qui est égale ou supérieure à 50 % en poids.

2. Utilisation comme additif anti-usure suivant la revendication I d'un savon de calcium surbasique préparé à partir d'acides carboxyliques organiques saturés en $C_8$, $C_9$ et $C_{10}$.

3. Utilisation comme additif anti-usure suivant la revendication I d'un savon de calcium préparé à partir d'un acide carboxylique saturé en $C_8$.

4. Utilisation suivant l'une quelconque des revendications précédentes, dans un lubrifiant d'usinage de métaux.

5. Utilisation suivant l'une quelconque des revendications 1 à 4 dans une boue de £orage.

6. Utilisation suivant l'une quelconque des revendications précédentes, dans laquelle le lubrifiant est un lubrifiant à base d'huile.

7. Utilisation suivant l'une quelconque des revendications 1 à 5, dans laquelle le lubrifiant est un lubrifiant à base d'huile/eau.

8. Emulsion huile-dans-eau contenant un savon de calcium comprenant du carbonate de calcium dispersé dans le sel de calcium d'un acide carboxylique, ledit acide consistant en un mélange ou une autre association d'acides carboxyliques organiques saturés contenant 7 à 13 atomes de carbone, ayant les caractéristiques suivantes :
   - une teneur en acides linéaires de 0 à 40 % en poids,
   - une teneur en acides ramifiés sur l'atome de carbone N° 2 de 0 à 20 % en poids, et
   - une teneur en acides mono- ou polysubstitués sur l'atome de carbone N° 3 et/ou sur les atomes de carbone de rang supérieur qui est égale ou supérieure à 50 % en poids.